# EUROPEAN PATENT APPLICATION

(11) **EP 2 869 524 A1**
(43) Date of publication of application: **06.05.2015**
(21) Application number: 13382439.1
(22) Date of filing: 31.10.2013
(51) Int. Cl.: H04L 29/06

(54) **A method and system for providing multipath TCP proxy services**

(71) Applicant: Telefonica Digital España, S.L.U., 28013 Madrid (ES)
(72) Inventor: Yang, Xiaoyuan, 28013 Madrid (ES); Lopez Recas, Diego, 28013 Madrid (ES); Navarro, Fernando, 28013 Madrid (ES)
(74) Representative: Carlos Hernando, Borja

(57) **Abstract**

In the method an Access Point comprises aggregating spare bandwidth of at least another Access Point and capturing data traffic from at least one user computing device, said user computing device taking benefit of said aggregated spare bandwidth. The method: requesting, by said Access Point admission to a MPTcp server including proxy control functions or services, to make use of the latter; checking, by a control module of said MPTcp server, credentials information of said Access Point to allow the latter said admission; and upon said admission being authorized, checking, by said MPTcp server through a connection with a service subscription repository module, if at least one origin server is authorized for accessing said proxy control functions or services.

The system is adapted to implement the method.

## Description

### Field of the art

The present invention is directed, in general, to broadband internet access technologies, and more particularly to a method and system for providing MultiPath TCP Proxy services for end-users and for Internet Service Providers (ISPs).

### Background of the invention

Motivated by the limitation of current broadband Internet access technologies and the economic incentives, new communication architecture designs have been proposed to combine existing WLAN and broadband technologies. The new combined solutions provide higher performance without requiring any new infrastructure deployments.

Backhaul Aggregation:
For instance, Domenico Giustiniano et al "Fair WLAN Backhaul Aggregation" [1] proposes a client-based solution to aggregate the WLAN backhaul capacity with a virtualized WIFI antenna that is able to connect simultaneously to multiple Access Points (APs). Such virtualized antenna enables WIFI devices (e.g.: laptop or phones) to connect with multiples APs at same time. Nevertheless, such antenna virtualization required chipset support and specific driver development per device, which involves high and prohibitive costs in a massive adoption.

Patent application WO 2013/011088 proposes a low-cost Access Point AP-based solution to aggregate backhaul capacity, enabling one single-radio AP to behave both as an AP for home users and as a client of other neighboring APs. Such an AP is able to route home-user traffic to neighbor backhaul link, providing capacity aggregation.

Similar to previous proposals in WLAN field, C. Rossi et al "*3GOL: Power-boosting ADSL using 3G onloading*"[2] proposed to onload part of users' ADSL traffic to 3G networks. Authors shown that 3G onloading solution is not only technically possible but also economically feasible, due to new available capacities with ongoing LTE upgrade plans and price decrease in cellular-based networks.

MultiPath TCP:
Regardless of the technology used for backhaul capacity aggregation, the solution has to provide mechanisms to split the home-user traffic to multiple links. Proposals like the one described by A. Ford et al "Architectural Guidelines for Multipath TCP Development" [3] provide a compressive extension for the current TCP protocol. MPTcp includes mechanisms that allow different Internet ends to establish parallel data flows in multiple links. Just like the classical TCP protocol, MPTcp handles the network congestion and data integrity.

In order to use MPTcp, however, both ends have to support MPTcp protocol. Despite of the current open-source efforts in including MPTcp in Linux kernel, the global adoption of MPTcp is still questionable. For instance, other OSs still has to implement such network stack and a global upgrade of all web servers may involve prohibitive costs for content providers.

MultiPath TCP Proxy:
G. Hampel and T. Klein, "MPTCP Proxies and Anchors" [4], proposed to deploy MPTcp Proxies as network elements to help MPTcp-unaware ends to benefit from MPTcp. The proposal includes two kinds of proxies, when: a) just one of the two ends is MPTcp-aware and b) both ends support MPTcp. In first case, the proxy modifies TCP packets to activate required MPTcp flags, whereas the second case, the proxy (called anchors) allows continuing connectivity.

Document [4] is extended by K. Xue et al "TMPP for Both Two MPTCP-unaware Hosts" [5] with third type of proxy, where both ends are MPTcp-unaware.

While proxy-based proposals are attractive in medium-term, the cost of such proxies can be prohibitive. Although authors in both [4] [5] suggest that such proxies could come from network operators that charge the connectivity to the end-users, the fact is that none of existing ISPs is doing this. The reason behind could be multiples:
Most of current services don't require MPTcp. Most of current network traffic is web HTTP traffic that is already prepared to enjoy multiple link capacity without MPTcp. For instance, a web page is composed by hundreds of small objects that could come from different physical links. Big video objects are being segmented in multiple small pieces that could come already from multiple links. P2P traffic is naturally multi-source multi-link friendly.

Current ISP charge model for network access is mostly flat rate based. It will be certainly difficult for ISPs to charge the home users for a better access using MPTcp. Although MPTcp can be seen as a way to offload mobile traffic, the fact is that WIFI access is not yet globally available.

Proxy capacity is hard to estimate. Although end-user traffic pattern is well known, dimensioning proxy to absolve entire end-user traffic is not viable because the cost. Under-dimensioned proxies could be a feasible solution, but there don't exit any solution to handle proxy overload.

It is therefore desirable to have a method and a system providing an MPTcp-proxy based services that at the same time are useful for end-users as well as for ISPs.

### References:

[1] "Fair WLAN Backhaul Aggregation", Domenico Giustiniano, Eduard Goma, Alberto Lopez Toledo, P. Rodriguez, ACM/MOBICOM'10, September 2010.
[2] C. Rossi, N.Vallina-Rodriguez, V. Erramilli, Yan Grunenberger, L. Gyarmati, N. Laoutaris, R. Stanojevic, K. Papagiannaki, P. Rodriguez. 3GOL: Power-boosting ADSL using 3G OnLoading. Accepted in ACM CoNEXT 2013.
[3] Ford, A., Raiciu, C., Handley, M., Barre, S., and J. Iyengar, "Architectural Guidelines for Multipath TCP Development", RFC 6182, March 2011.
[4] Hampel, G. and T. Klein, "MPTCP Proxies and Anchors", draft-hampel-mptcp-proxies-anchors-00 (work in progress), February 2012.
[5] K. Xue, J. Guo, P. Hong, L. Zhu, F. Yu, "TMPP for Both Two MPTCP-unaware Hosts", June 20,2013

### Description of the Invention

According to a first aspect there is provided a method for providing MultiPath TCP Proxy services, wherein as commonly in the field an Access Point comprises aggregating spare bandwidth of at least a neighbor Access Point and further capturing data traffic from at least one user computing device, said user computing device taking benefit of said aggregated spare bandwidth.

On contrary of the known proposal, the method of the first aspect comprises: requesting, by said Access Point admission to a MPTcp server including proxy control functions or services, to make use of the latter; checking, by a control module of said MPTcp server, credentials information of said Access Point to allow the latter said admission; and upon said admission being authorized, checking, by said MPTcp server through a connection with a service subscription repository module, if at least one origin server is authorized for accessing said proxy control functions or services.

In an embodiment, upon said origin server being authorized, a load monitoring module of said MPTcp server comprises checking the traffic load of the latter, wherein, a) if said captured data traffic is lower than said MPTcp server traffic load, the Access Point forwards the captured data traffic to the origin server through the MPTcp server, or b) if said captured data traffic is higher than said MPTcp server traffic load, the Access Point forwards the captured data traffic directly to said origin server.

In another embodiment, and in case said origin server being not-authorized, the access point comprises forwarding the captured data traffic directly to said origin server.

In another embodiment, if said admission has not been authorized, it is checked if said origin server is authorized for accessing said proxy control functions or services. In this case, two different situations are considered.

In a first option, and in the case that the origin server as a consequence of said checking has been authorized, the load monitoring module of the MPTcp server comprises checking traffic load of the latter, and again, a) if the captured data traffic is lower than said MPTcp server traffic load, the Access Point (AP) forwards the captured data traffic to the origin server through the MPTcp server, or b) if the captured data traffic is higher than said MPTcp server traffic load, the Access Point forwards the captured data traffic directly to the origin server.

In a second option, and in case that the origin server as a consequence of said checking has not been authorized, the Access Point forwards the captured data traffic directly to said origin server.

The Access Point is synchronized, by means of a Service Subscription Repository Sync module, with said Service Subscription Repository module, by downloading a list that includes the origin servers authorized for accessing or making use of the proxy control functions or services.

The origin servers included in said list, which can be stored in a database of said Access Point, may belong to an area near said Access Point, being that area determined by a backhaul link capacity between the Access Point and the origin server.

In another embodiment, proxy overloaded situation may be also handled, in this case, the Access Point sends to the MPTcp server, a plurality of messages in order the latter reporting its traffic load. Then the Access Point checks if a consecutive number of said received reported traffic load messages indicate a non-overloading situation of said MPTcp server. If said consecutive number of received reported traffic load messages is at least four the captured data traffic is forwarded to the origin server through the MPTcp server. The received messages preferably comprise a number between 3 to 10 messages.

In case the MPTcp server rejects the forwarded captured data traffic, the Access Point re-forwards them to said origin server.

According to a second aspect there is provided a system for providing MultiPath TCP Proxy services, comprising as commonly in the field:
an Access Point at least comprising: means configured for aggregating spare bandwidth of at least another Access Point; and means configured to capturing data traffic from at least one user computing device; and
said user computing device configured for taking benefit of said aggregated spare bandwidth,

The system of the second aspect in a characteristic manner includes:
a MPTcp server with proxy control functions or services at least comprising: a MPTcp traffic forwarding module configured to manipulate TCP packets to establish MPTcp connections; and a control module configured to check credentials information of said Access Point to allow the latter an admission to said proxy control functions or services;
a service subscription repository module configured to maintain connectivity with said MPTcp server to check if at least one origin server is authorized for accessing said proxy control functions or services; and at least one origin server.

In an embodiment, the MPTcp server further includes a load monitoring module configured to check traffic load thereof, and the Access Point further comprises a Traffic Forwarder Module configured to forward the captured data traffic to the origin server either directly or through said MPTcp.

In an embodiment, the Access Point further includes a Service Subscription Repository Sync module configured for sync-up with said Service Subscription Repository module and a database for storing the authorized origin servers.

The system of the second aspect is adapted to implement the method of the first aspect.

### Brief Description of the Drawings

The previous and other advantages and features will be more deeply understood from the following detailed description of embodiments, with reference to the attached, which must be considered in an illustrative and non-limiting manner, in which:
Figure 1 is an illustration of the present invention general architecture according to some embodiments.
Figure 2 is an illustration of the different modules that the MPTcp server of the present invention may include according to some embodiments.
Figure 3 is a flow diagram illustrating all the steps of the method of the first aspect according to different embodiments.

### Description of Several Embodiments

The present invention provides a full control scheme for ISPs to provide MPTcp-Proxy based services in Access Points (APs) with backhaul aggregation. Generally, the invention general architecture it will be composed by: A backend system that allows content-providers to contract or subscribe MPTcp-Proxy services from ISP for a certain area; Control modules in the Access Point/s (AP/s) to forward traffic to MPTcp-Proxy server or to origin-server; and control modules that allow the APs to decide when the home-user traffic should be forwarded to MPTcp-Proxy server.

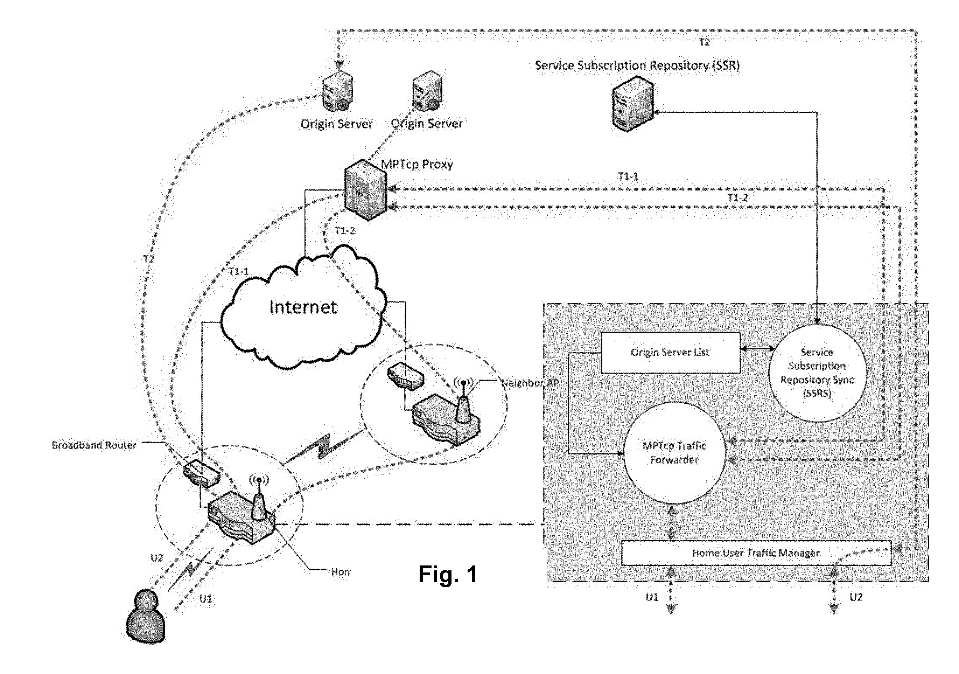

Fig. 1 illustrates the present invention general architecture. In the core network, ISP will deploy MPTcp Proxies as well as a Service Subscription Repository (SSR). In each AP or Home-AP as illustrated in the fig., different control modules will be included to establish MPTcp communication.

The MPTcp server (or MPTcp Proxy) runs in the cloud. The goal of this MPTcp Proxy server is to provide a terminator for Multipath TCP communication. Any Home-AP can communicate with Proxy with MPTcp and perform aggregation of WLAN backhaul.

In Fig. 1, it can be seen that Home User traffic U1 is intercepted by Home-AP. The Home-AP establishes two backhauls connections (T1-1 and T1-2) with MPTcp Proxy server and performs the traffic forwarding. The MPTcp Proxy server, in other hand, establishes a connection with origin server and performs the traditional single-path TCP.

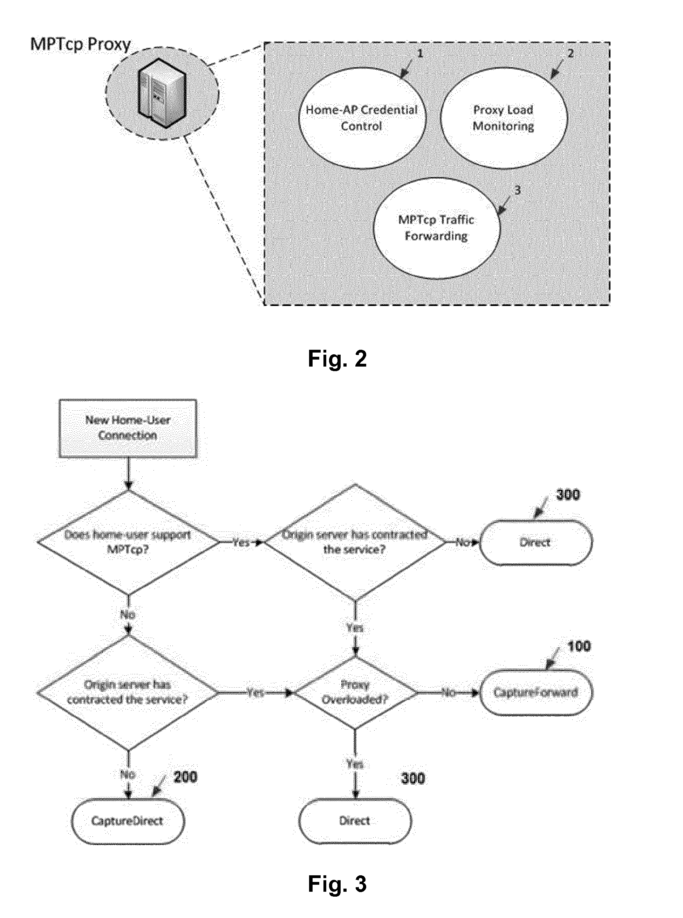

Fig. 2 illustrates the three modules that may include the MPTcp Proxy server. A control module or Home-AP credential control 1 provides the authentication of Home-APs. Only those Home-APs with correct credential are allowed to use the proxy to forward the information. An MPTcp Traffic Forwarding module 3 implements all required TCP packet manipulation to establish MPTcp connections.

In an embodiment, the MPTcp proxy server may further include a load monitoring module that monitors the network load in the proxy. This module is also on charge to reject an MPTcp connection from the Home-AP when the load reaches to a certain level. Once rejected, Home-AP will use a direct connection with origin server for a period of time. Preferably, this period is set to be 5 minutes.

Service Subscription Repository (SSR) module provides different APIs that allow different content providers to contract or subscribe the MPTcp Proxy service/s. Both domain-based and IP subnet based specification are allowed. For instance, a content provider can tell SSR that it is interested to contract or subscribe the service for all requests to **.domian.com* or to all IPs in *123.2.1.0*/*24* subnet.

Furthermore, ISP will specify different available areas that a content provider can subscribe to. For each area, ISP specifies the estimated backhaul link capacity. A preferred option is to allow content providers to only use proxy service in certain area that requires the MPTcp to offer their service. For instance, a content provide may be interested to provide a HD video service in areas that backhaul link is too slow.

Service Subscription Repository Sync (SSRS) module runs in Home-AP and it is on charge of sync-up with SSR. Periodically, SSRS connects with SSR and download a list of contracted or subscribed origin servers. According to an embodiment, only origin servers of those content providers that want the service in the Home-AP area are downloaded. The rest is filtered out in the sync-up process. The downloaded list may be then stored in a database or Origin Server List.

Traffic Forwarder Module (MTF) module is on charge of forwarding Home-User traffic to MPTcp Proxy. This module will modify the SYN packet to include the MPTcp-aware flags. This module does also handle the proxy overload situation. In order to check if a proxy is overloaded, periodical health-check messages are sent to proxy. The proxy report the load-level, and each Home-AP decides if the MPTcp proxy server is overloaded based, for instance, on following logic: If more than three consecutive health-check messages report an overloaded situation, Home-AP consider the MPTcp proxy server overloaded. An overloaded MPTcp proxy server is considered ready for service, when more than n consecutive health-check messages report non-overload situation, being n preferably a random number between 3 to 10.

Although an MPTcp proxy server is considered ready for service, it could be the case that MPTcp proxy server is overloaded and refuse the connection. In such a case, the Home-AP by means of the MTF will replica the SYN packet to the origin server to establish a direct communication.

Home User Traffic Manager (HUTM) module is on charge to capture the Home-User traffic and perform three possible actions (CaptureForward, CaptureDirect, Direct), according to different embodiments as illustrated in Fig. 3.

CaptureForward action 100 means that Home-User traffic will be captured and passed to MPTcp Traffic Forwarder Module (MTF). MTF will forward the traffic through the proxy by using an MPTcp connection. Different situations may give rise this CaptureForward action 100 being performed by HUTM module. For instance, when a Home-AP and an origin server have been authorized to use proxy services and/or functions of the MPTcp server being the latter not overloaded. Alternatively, it may happen that Home-AP has not been authorized, that is, it doesn't support MPTcp, but an origin server it is, meaning that it has contracted the services provided by the MPTcp server for instance, in this case, again if the MPTcp server is not overloaded CaptureForward action 100 will be performed.

CaptureDirect action 200 is similar to CaptureForward action 100, but in this case MTF module of the Home-AP will perform an MPTcp connection directly with origin server. HUTM module takes this action when origin server hasn't contracted or subscribed the proxy service and Home-user doesn't support MPTcp. This action 200 allows possible MPTcp communications without proxy when only origin-server supports MPTcp.

Direct action 300 indicates that Home-User traffic is forwarded directly to origin server. HUTM module may perform this action for example when Home-User supports natively MPTcp and origin server hasn't subscribed to the proxy functions or services. The native support for MPTcp is checked by looking flags in the SYN packet. Alternatively, HUTM module may also perform this action in case the origin server has subscribed the proxy functions or services, and the MPTcp server is ready for service, not overloaded.

The present invention provides all mechanisms to build an MPTcp-Proxy based network service for network operators. Content providers will be the clients for the service. Content providers have the incentive to contract such a service because its service can't be offered to the home-users of those areas with low backhaul capacity. Network operators can also offer services to the content providers. Furthermore, home-users will be able to benefit from MPTcp without extra subscription.

The scope of the invention is given by the appended claims and all variations and equivalents which fall within the range of the claims are intended to be embraced therein.

## Claims

1. A method for providing MultiPath TCP Proxy services, wherein an Access Point (AP) comprises aggregating spare bandwidth of at least another Access Point (AP_N) and said Access Point (AP) further capturing data traffic from at least one user computing device, said user computing device taking benefit of said aggregated spare bandwidth, **characterized in that** the method comprises:
- requesting, said Access Point (AP) admission to a MPTcp server including proxy control functions or services, to make use of the latter;
- checking, by a control module of said MPTcp server, credentials information of said Access Point (AP) to allow the latter said admission; and
- upon said Access Point (AP) admission being authorized, checking, by said MPTcp server through a connection with a Service Subscription Repository module (SSR), if at least one origin server is authorized for accessing said proxy control functions or services.

2. A method according to claim 1, wherein a Load Monitoring module of said MPTcp server comprises, upon said at least one origin server being authorized, at least checking traffic load of the MPTcp server, wherein
a) if said captured data traffic is lower than said MPTcp server traffic load, said Access Point (AP) forwarding said captured data traffic to said origin server through the MPTcp server, or
b) if said captured data traffic is higher than said MPTcp server traffic load, said Access Point (AP) forwarding said captured data traffic directly to said origin server.

3. A method according to claim 1, wherein said Access Point (AP), in case said at least one origin server being not-authorized, forwards said captured data traffic directly to said origin server.

4. A method according to claim 1, comprising, in case said Access Point (AP) admission being not-authorized, checking authorization of the origin server for accessing said proxy control functions or services.

5. A method according to claim 4, wherein in case the origin server as a consequence of said checking being authorized, said Load Monitoring module of the MPTcp server comprises checking traffic load of the latter, wherein:
a) if said captured data traffic is lower than said MPTcp server traffic load, said Access Point (AP) forwarding said captured data traffic to said origin server through the MPTcp server, or
b) if said captured data traffic is higher than said MPTcp server traffic load, said Access Point (AP) forwarding said captured data traffic directly to said origin server.

6. A method according to claim 4, wherein in case said origin server as a consequence of said checking being not-authorized, said Access Point (AP) comprises forwarding the captured data traffic directly to said origin server.

7. A method according to previous claims, wherein said Access Point (AP) is synchronized, by means of a Service Subscription Repository Sync (SSRS) module, with said Service Subscription Repository module (SSR).

8. A method according to claim 7, wherein said synchronization comprises downloading a list that includes the origin servers authorized for accessing said proxy control functions or services.

9. A method according to claim 8, wherein the origin servers included in said list belongs to an area near said Access Point (AP), said area being determined by a backhaul link capacity between the Access Point (AP) and said origin server.

10. A method according to claim 8, wherein said list of authorized origin servers is further stored in a database of said Access Point (AP).

11. A method according to any of previous claims 2 or 5, wherein upon said step b) being performed, further comprising:
- sending, by said Access Point (AP) to said MPTcp server, a plurality of messages in order the latter reporting its traffic load; and
- checking, by said Access Point (AP), if a consecutive number of said received reported traffic load messages indicate a non-overloading situation of said MPTcp server.

12. A method according to claim 11, further comprising, if said consecutive number of received reported traffic load messages is at least four, forwarding said captured data traffic to the origin server through the MPTcp server, wherein said received messages comprises a number between 3 to 10 messages.

13. A method according to claim 12, wherein if said MPTcp server rejects said forwarded captured data traffic, said Access Point (AP) re-forwards said captured data traffic to said origin server.

14. A method according to any of previous claims 2 or 5, wherein in said step a) the captured data traffic is either forwarded by said Access Point (AP) by making use only of its own bandwidth or by further making use of the spare bandwidth aggregated from said another Access Point (AP_N).

15. A system for providing MultiPath TCP Proxy services, comprising:
- an Access Point (AP) at least comprising:
- means configured for aggregating spare bandwidth of at least another Access Point (AP_N); and
- means configured to capturing data traffic from at least one user computing device; and
- said user computing device configured for taking benefit of said aggregated spare bandwidth,
**characterized in that** it further comprises:
- a MPTcp server with proxy control functions or services comprising:
- a MPTcp traffic forwarding module configured to manipulate TCP packets to establish MPTcp connections; and
- a control module configured to check credentials information of said Access Point (AP) to allow the latter an admission to said proxy control functions or services; and
- a Service Subscription Repository module (SSR) configured to maintain connectivity with said MPTcp server to check if at least one origin server is authorized for accessing said proxy control functions or services; and
- said at least one origin server.

16. A system according to claim 15, wherein said MPTcp server further comprises a Load Monitoring module configured to check traffic load of said MPTcp server, and wherein said Access Point (AP) further comprises a Traffic Forwarder Module (MTF) configured to forward said captured data traffic to said origin server either directly or through said MPTcp.

17. A system according to claim 15 or 16, wherein said Access Point (AP) further comprises a Service Subscription Repository Sync (SSRS) module configured for sync-up with said Service Subscription Repository module (SSR); and

18. A system according to claim 17, including a database for storing authorized origin servers.
